# EUROPÄISCHE PATENTSCHRIFT

(11) **EP 0 684 099 B1**
(45) Veröffentlichungstag und Bekanntmachung des Hinweises auf die Patenterteilung: **26.01.2000**
(21) Anmeldenummer: 95106792.5
(22) Anmeldetag: 05.05.1995
(51) Int. Cl.: B23B 51/10, B23B 29/24, B23B 51/08, B23B 27/16

(54) **Kombinationswerkzeug**
Combination tool
Outil combiné

(30) Priorität: 27.05.1994 DE 4418571
(43) Veröffentlichungstag der Anmeldung: 29.11.1995
(73) Patentinhaber: Joh. & Ernst Link GmbH & Co. KG, D-70565 Stuttgart (DE)
(72) Erfinder: Link, Hans-Jörg, D-70563 Stuttgart (DE)
(74) Vertreter: Kohl, Karl-Heinz

(56) Entgegenhaltungen:
- WO-A-90/04474
- DE-A- 684 609
- DE-U- 9 319 460
- FR-A- 601 035

## Beschreibung

Die Erfindung betrifft ein Kombinationswerkzeug nach dem Oberbegriff des Anspruches 1.

Es sind Kombinationswerkzeuge bekannt, die einen Bohrer sowie ein Fasteil aufweisen. Mit dem Bohrer wird im Werkstück eine Bohrung gebohrt, die im gleichen Arbeitsgang mit dem Fasteil beim weiteren Bohrfortschritt an einem Ende angefast wird. Das Fasteil sitzt auf einem im Grundkörper verschiebbaren Schlitten, der mittels einer Stellschraube verstellt werden kann. Das Fasteil selbst wird mit einer Schraube auf dem Schlitten befestigt. Zusätzlich zu dieser Stellschraube sind im Grundkörper Klemmschrauben vorgesehen, mit denen der Schlitten in der eingestellten Lage festgeklemmt werden kann. Somit sind zur Verstellung und zum Festklemmen des Schlittens und des Fasteiles mehrere Bauteile erforderlich, wodurch die Herstellung des Kombinationswerkzeuges aufwendig und teuer wird. Darüber hinaus ist die Einstellung des Fasteiles infolge der verschiedenen Schrauben umständlich und zeitraubend.

Beim gattungsgemäßen Kombinationswerkzeug (WO-A-90/04474) sind die Fasteile in einem Faskopf untergebracht, der auf einem den Bohrer aufnehmenden Grundkörper um 360° verdrehbar und in mehreren Stellungen indexierbar gelagert ist. Da der Faskopf mit den Fasteilen nur stufenweise verdrehbar ist, ist nach einer Axialverstellung des Bohrers eine umständliche und aufwendige Feineinstellung notwendig, um die Fasteile gegenüber dem Bohrer genau auszurichten. Das Kombinationswerkzeug besteht darüber hinaus aus einer größeren Zahl von Einzelteilen, so daß seine Herstellung aufwendig und teuer ist.

Es ist bekannt (FR-A-601 035), einen Bohrer sowie Fasteile in einem konischen Grundkörper mittels einer konischen Spannhülse zu verspannen. Wird der Bohrer axial verstellt, ist anschließend eine umständliche und zeitaufwendige Feineinstellung notwendig, um die Fasteile und den Bohrer genau zueinander auszurichten.

Aus der DE-A-684 609 ist es bekannt, einen Gewindebohrer mit zusätzlichen Nuten zu versehen, in die Druckschrauben eingreifen, mit denen auf dem Bohrer ein Zusatzwerkzeug oder ein Anschlagring befestigt werden kann.

Es ist schließlich bekannt (DE-U-93 19 460), eine Schneidplatte in einem Schneidplattenträger mittels einer Befestigungsschraube zu verspannen.

Der Erfindung liegt die Aufgabe zugrunde, das gattungsgemäße Kombinationswerkzeug so auszubilden, daß bei konstruktiv einfacher und kostengünstiger Fertigung den Bohrer relativ zum Fasteil einfach und schnell verstellt werden kann.

Diese Aufgabe wird beim gattungsgemäßen Kombinationswerkzeug erfindungsgemäß mit den kennzeichnenden Merkmalen des Anspruches 1 gelöst.

Beim erfindungsgemäßen Kombinationswerkzeug ist der Klemmteil einstückig mit dem Grundkörper ausgebildet. Dadurch hat das Kombinationswerkzeug einen einfachen Aufbau und läßt sich kostengünstig fertigen. Das Fasteil liegt in der Aufnahme des Grundkörpers und wird mit dem Klemmteil verspannt. Wird der Bohrer im Grundkörper axial verstellt, wird er infolge der wendelförmigen Spannfläche während des Axialverstellvorganges um seine Achse gedreht. Da die Spannfläche die gleiche Steigung wie der wendelförmige, die Spannut des Bohrers begrenzende Steg hat, bleibt bei der Axialverstellung die Zuordnung des Fasteiles zum Bohrer beibehalten. Darum sind nach der Axialverstellung des Bohrers zusätzliche Einstellarbeiten nicht erforderlich. Das erfindungsgemäße Kombinationswerkzeug ist infolge seiner einfachen Bauweise nicht nur kostengünstig in der Fertigung, sondern kann einfach und schnell eingestellt werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Seitenansicht ein erfindungsgemäßes Kombinationswerkzeug,
- Fig. 2: einen Axialschnitt durch das Kombinationswerkzeug gemäß Fig. 1,
- Fig. 3: eine Stirnansicht eines Grundkörpers des erfindungsgemäßen Kombinationswerkzeuges gemäß Fig. 1,
- Fig. 4: in vergrößerter Darstellung einen Teil des Grundkörpers in einer Ansicht gemäß Pfeil IV in Fig. 3,
- Fig. 5: eine Seitenansicht eines Fasteiles des erfindungsgemäßen Kombinationswerkzeuges,
- Fig. 6: einen Schnitt längs der Linie VI-VI in Fig. 5,
- Fig. 7: eine Draufsicht auf das Fasteil gemäß Fig. 5,
- Fig. 8: die Einzelteile des erfindungsgemäßen Kombinationswerkzeuges,
- Fig. 9: einen Axialschnitt durch einen Teil des Schaftes eines Bohrers des erfindungsgemäßen Kombinationswerkzeuges.

Mit dem Kombinationswerkzeug ist es möglich, an einem Werkstück in einem Arbeitsdurchgang zu bohren und den Bohrungsrand mit einer Fase zu versehen. Das Kombinationswerkzeug hat einen Grundkörper 1, der einen Schaft 2 zum Einspannen in eine Antriebsmaschine hat. Der Schaft 2 ist vorteilhaft einstückig mit einem Aufnahmeteil 3 für einen Spiralbohrer 4 und wenigstens ein Fasteil 5 ausgebildet. Im dargestellten Ausführungsbeispiel sind im Aufnahmeteil zwei Fasteile 5 diametral einander gegenüberliegend vorgesehen. Das Werkzeug kann aber auch nur ein Fasteil enthalten.

Der Schaft 2 und der Aufnahmeteil 3 sind jeweils von einer axialen Bohrung 6 und 7 durchsetzt, die vorteilhaft gleichen Durchmesser aufweisen, so daß sie in einem Arbeitsgang am Werkzeug hergestellt werden können. Die Bohrung 6 im Schaft 2 ist mit einem Gewinde 8 versehen und nimmt eine Stellschraube 9 auf, an der der Spiralbohrer 4 anliegt. Mit der Stellschraube 9 kann der axiale Überstand 10 des Spiralbohrers 4 über den Grundkörper 1 stufenlos eingestellt werden. Die Länge des überstehenden Teils des Spiralbohrers 4 richtet sich nach der Tiefe der im Werkstück 11 herzustellenden Bohrung.

Vorteilhaft ist die Stellschraube 9 mit einer zentralen Zuführbohrung 12 für ein Kühlmittel versehen. Der Spiralbohrer 4 weist im Ausführungsbeispiel zwei Kühlmittelkanäle 14 und 15 auf, die im Bereich der Bohrerspitze münden. Selbstverständlich ist es auch möglich, das Kühlmittel getrennt vom Kombinationswerkzeug direkt an der Bohrstelle zuzuführen.

Der Spiralbohrer 4 hat einen Schaft 16 und einen daran anschließenden Arbeitsteil 17. Im Arbeitsteil sind zwei wendelförmig verlaufende Spannuten 18 und 19 vorgesehen, die sich bis zur Bohrerspitze erstrecken. Zwischen den Spannuten 18, 19 verläuft ein entsprechend wendelförmig verlaufender Steg 20, 20'.

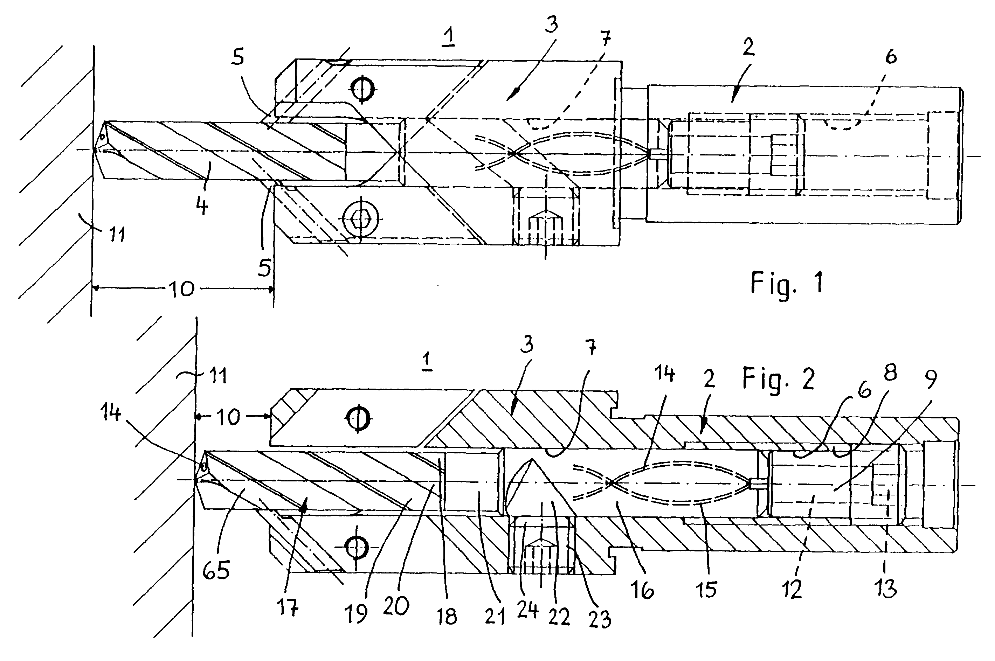

Der Arbeitsteil 17 des Spiralbohrers 4 hat gleichen oder kleineren Durchmesser als der Schaft 16, der an der Innenwandung der Bohrungen 6 und 7 des Grundkörpers 1 anliegt. Der Arbeitsteil 17 hat im dargestellten Ausführungsbeispiel radialen Abstand von der Wandung der Bohrung 7 (Fig. 1 und 2). Die Spannuten 18, 19 und die Stege 20, 20' enden mit Abstand vom Schaft 16. Zwischen ihm und den Spannuten 18, 19 befindet sich ein zylindrisches Zwischenstück 21.

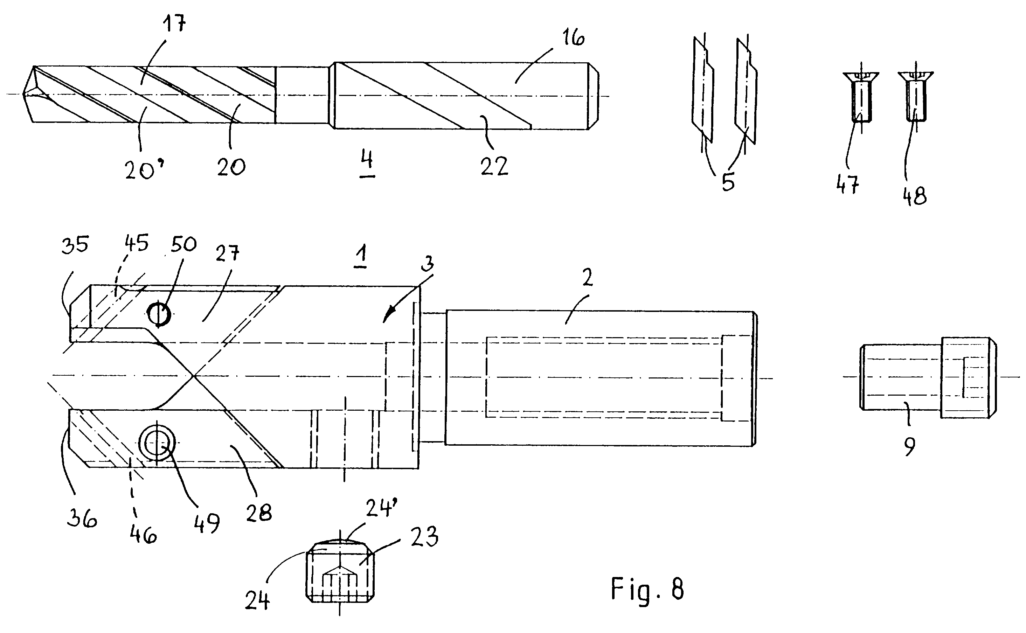

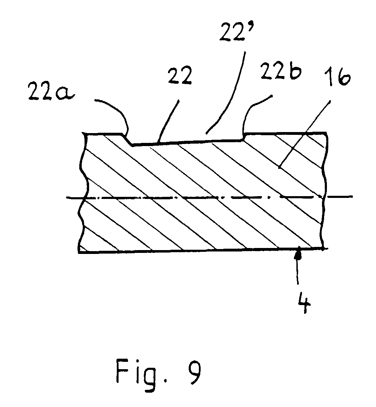

Zum Festspannen des Spiralbohrers 4 im Grundkörper 1 ist der Schaft 16 mit einer wendelförmig verlaufenden Spannfläche 22 versehen, die gleiche Steigung wie die Stege 20, 20' bzw. die Spannuten 18, 19 hat und deren Tiefe in Richtung auf das Schaftende stetig abnimmt (Fig. 9). Die Spannfläche 22 liegt dadurch, im Axialschnitt gesehen, unter einem spitzen Winkel zur Schaftachse. Die Spannfläche 22 wird durch den Boden einer Nut 22' gebildet, die geneigte, wendelförmig verlaufende Seitenwände 22a, 22b aufweist. In die Nut 22' greift eine Spannschraube 23 ein, die vorteilhaft versenkt im Grundkörper 1 untergebracht ist. Die Spannschraube 23 hat ein kegelstumpfförmiges Ende 24, mit dem sie in die Nut 22' des Spiralbohrers 4 eingreift. Die Stirnseite 24' der Spannschraube 23 ist kalottenförmig ausgebildet (Fig. 8), so daß die Spannschraube nicht punkt-, sondern linienförmig an der Spannfläche 22 anliegt. Soll der Überstand 10 des Spiralbohrers 4 verändert werden, wird die Spannschraube 23 geringfügig gelockert. Dann läßt sich der Spiralbohrer 4 relativ zum Grundkörper 1 stufenlos verstellen, wobei der Spiralbohrer infolge des noch vorhandenen Eingriffes der Spannschraube 23 in die Nut 22' bei seiner Axialverstellung entsprechend der Steigung der Nut 22' um seine Achse gedreht wird.

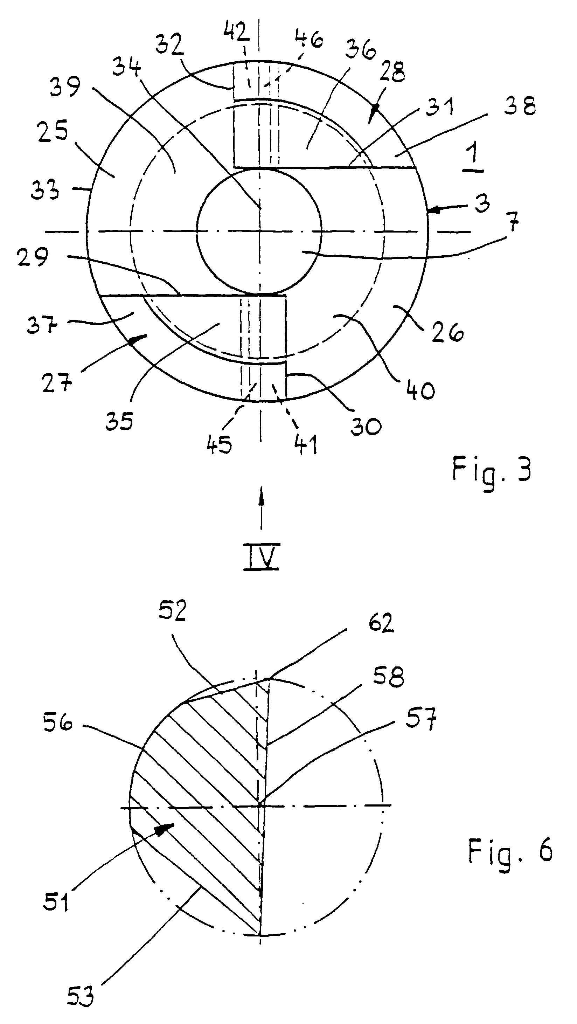

Der Aufnahmeteil 3 des Grundkörpers 1 hat kreisförmigen Querschnitt (Fig. 3). Auf diametral einander gegenüberliegenden Seiten hat der Aufnahmeteil 3 zwei Ausnehmungen 25 und 26, die ineinander übergehen und die durch zwei Zwischenstücke 27 und 28 voneinander in Umfangsrichtung getrennt sind. In Achsrichtung gesehen (Fig. 3) werden die Zwischenstücke 27 und 28 von senkrecht zueinander liegenden ebenen Seitenwänden 29, 30 bzw. 31, 32 begrenzt. Die Seitenwände 29, 31, die länger sind als die Seitenwände 30, 32, liegen tangential zur Bohrung 7 und erstrecken sich vom zylindrischen Außenmantel 33 des Aufnahmeteiles 3 aus bis über eine senkrecht zu ihnen verlaufende Axialebene 34 des Aufnahmeteils. Die kürzeren Seitenwände 30, 32 liegen beiderseits der Axialebene 34 und verlaufen parallel zu ihr. Sie erstrecken sich ebenfalls bis zum Außenmantel 33.

Die beiden Zwischenstücke 27, 28 haben eine gemeinsame ebene Stirnseite 35, 36, die über eine Fase 37, 38 in den Außenmantel 33 übergeht. Die Stirnflächen 35, 36 liegen senkrecht zur Achse des Grundkörpers 1.

Die Ausnehmung 25 wird in Umfangsrichtung von der Seitenwand 32 des Zwischenstückes 28 und der Seitenwand 29 des Zwischenstückes 27 begrenzt. Zwischen den beiden Seitenwänden 29, 32 verläuft der Boden 39 der Ausnehmung 25, der von der Seitenwand 32 aus stetig ansteigt und, in Achsrichtung gemäß Fig. 3 gesehen, von der Bohrung 7 bis zum Außenmantel 33 reicht. Die Seitenwand 32 ist damit in Achsrichtung länger als die Seitenwand 29.

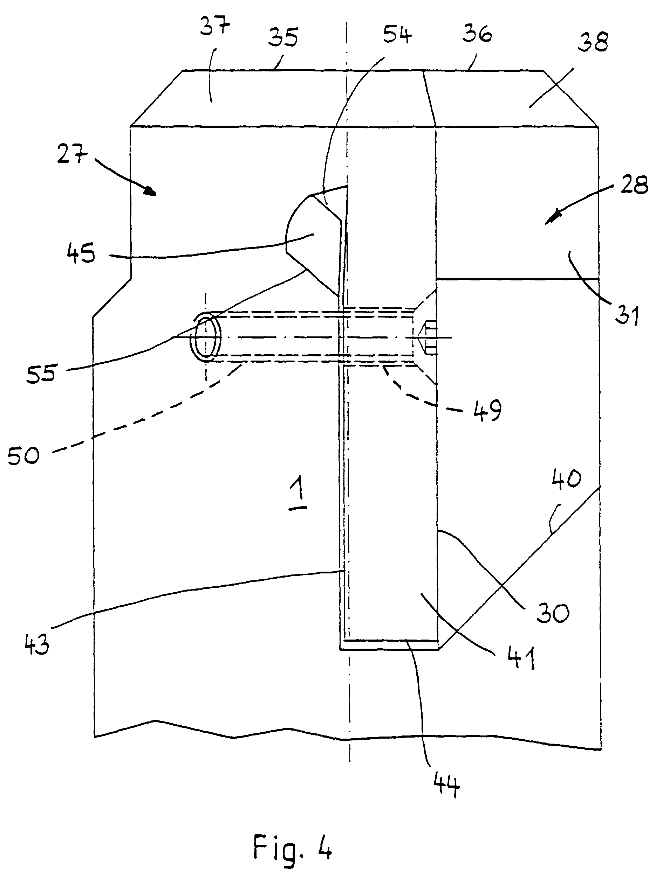

Die gegenüberliegende Ausnehmung 26 wird von den Seitenwänden 30 und 31 der Zwischenstücke 27 und 28 begrenzt. Die Seitenwände schließen an den Boden 40 der Ausnehmung 26 an, der von der Seitenwand 30 aus stetig ansteigt (Fig. 4). Somit ist auch die Seitenwand 31 in Achsrichtung kürzer als die Seitenwand 30. Der Boden 40 erstreckt sich wiederum zwischen dem Außenmantel 33 und der Bohrung 7. Die Seitenwände 30 und 32 sowie 29 und 31 sind jeweils gleich lang. Durch die Ausnehmungen 25, 26 im Grundkörper 1 kann während des Bohrvorganges das Bohrmaterial, das über die Spannuten 18, 19 nach hinten gefördert wird, seitlich austreten.

Wie sich aus den Fig. 1 und 2 ergibt, befindet sich die Spannschraube 23 im Bereich außerhalb der Zwischenstücke 27, 28. Sie ist vorteilhaft als Inbusschraube ausgebildet und versenkt im Aufnahmeteil 3 angeordnet. Mit ihr wird der Spiralbohrer 4 drehfest mit dem Grundkörper 1 verbunden.

Die beiden Zwischenstücke 27, 28 haben jeweils einen Klemmschenkel 41, 42 (Fig. 3 und 4), mit denen jeweils eines der beiden Fasteile 5 festgeklemmt werden kann. Wie Fig. 4 für den Klemmschenkel 41 zeigt, hat er eine vorzugsweise parallel zur Seitenwand 30 verlaufende Seitenfläche 43, die an dem von der Stirnseite 35 abgewandten Ende in eine quer zu ihr liegende Unterseite 44 übergeht, welche die beiden Seitenflächen 43 und 30 miteinander verbindet. Längs der Seitenfläche 43 und der Unterseite 44 ist der Klemmschenkel 41 vom übrigen Teil des Aufnahmeteiles 3 getrennt. In gleicher Weise ist auch der diametral gegenüberliegende Klemmschenkel 42 ausgebildet. Nahe der Fase 37, 38 sind die Klemmschenkel 41, 42 mit dem Aufnahmeteil 3 fest verbunden, vorzugsweise einstückig mit ihm ausgebildet.

Die Zwischenstücke 27, 28 weisen mit geringem Abstand von der Fase 37, 38 jeweils eine Aufnahmeöffnung 45 und 46 für die Fasteile 5 auf. Die Achsen der diametral einander gegenüberliegenden Aufnahmeöffnungen 45, 46 konvergieren in Richtung auf die Stirnseite 35, 36 der Zwischenstücke 27, 28. Die Aufnahmeöffnungen 45, 46 durchsetzen die Zwischenstücke 27, 28 und münden teilweise in die Stirnseiten 35, 36 der Zwischenstücke 27, 28. Auf einer Seite werden die Aufnahmeöffnungen 45, 46 durch die Klemmschenkel 41, 42 begrenzt.

Um die in den Aufnahmeöffnungen 45, 46 liegenden Fasteile 5 festzuklemmen, werden die Klemmschenkel 41, 42 durch Klemmschrauben 47, 48 (Fig. 8) festgeklemmt. Sie werden durch Öffnungen 49 in den Klemmschenkeln 41, 42 gesteckt und in Gewindebohrungen 50 der Zwischenstücke geschraubt. Dadurch werden die Klemmschenkel 41, 42 fest gegen die in den Aufnahmeöffnungen 45, 46 liegenden Fasteile 5 gedrückt, die dadurch zuverlässig im Grundkörper 1 gehalten werden. Die Achsen der Öffnungen 49 und der Bohrungen 50 liegen quer zu den Fasteilen 5 und mit nur geringem Abstand von der Aufnahmeöffnungen 45, 46 (Fig. 8). Dadurch ist ein sicheres Einspannen der Fasteile 5 gewährleistet.

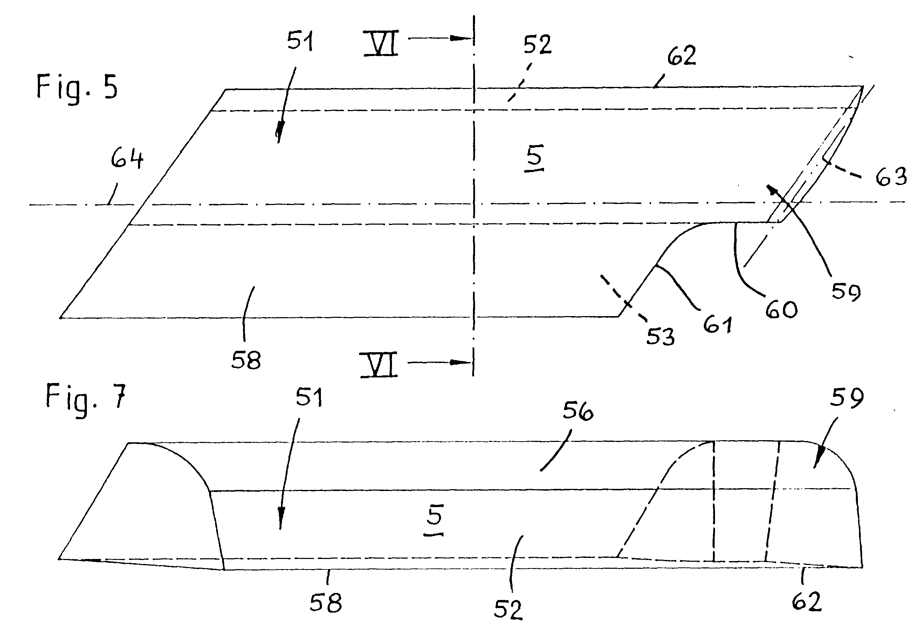

Das Fasteil 5 (Fig. 5 bis 7) hat einen in der jeweiligen Aufnahmeöffnung 45, 46 liegenden Halterungsteil 51, der im wesentlichen halbkreisförmigen Querschnitt hat (Fig. 6). Er ist mit zwei winklig zueinander liegenden ebenen Abflachungen 52 und 53 versehen, denen entsprechende ebene Seitenwände 54, 55 (Fig. 4) der Aufnahmeöffnungen 45, 46 zugeordnet sind. Dadurch sind die Fasteile 5 verdrehsicher in den Aufnahmeöffnungen 45, 46 gehalten. Wie Fig. 6 zeigt, gehen die Abflachungen 52, 53 an einer Seite in einen Außenmantelabschnitt 56 über, der auf einem gedachten Zylindermantel um die Achse 57 liegt. Am anderen Rand sind die beiden Abflachungen 52, 53 durch eine ebene Rückseite 58 miteinander verbunden, die, bezogen auf eine Axialebene des gedachten Zylindermantels (Fig. 6), unter einem spitzen Winkel zu dieser Axialebene liegt. Die längere Abflachung 53 liegt mit ihrem einen Rand in dieser Axialebene, während die kürzere Abflachung 52 über diese Axialebene hinausreicht.

Der Halterungsteil 51 geht in einen Schneidenteil 59 über, dessen Unterseite 60 über eine stumpfwinklig zu ihr liegende Zwischenfläche 61 an die Abflachung 53 anschließt. Der an die Rückseite 58 anschließende Rand 62 der Abflachung 52 bildet die Schneide des Fasteiles 5. Die an die Schneide 62 anschließende Brustfläche 63 des Schneidenteiles 59 liegt unter einem solchen Winkel zur Längsachse 64 des Fasteiles 5, daß diese Brustfläche 63 in der Einbaulage zumindest annähernd parallel zur Rükkenfläche 65 des Steges 20, 20' des Spiralbohrers 4 liegt.

Das Kombinationswerkzeug läßt sich sehr einfach montieren und demontieren. In den Schaft 2 des Grundkörpers 1 wird die Stellschraube 9 so weit geschraubt, bis der Spiralbohrer 4 den für den Bearbeitungsvorgang erforderlichen Überstand 10 in bezug auf den Grundkörper 1 aufweist. Der Spiralbohrer 4 wird von der Stirnseite des Aufnahmeteiles 3 aus in die Bohrung 6, 7 so weit eingesetzt, bis der Spiralbohrer mit seinem Schaft 16 an der Stellschraube 9 anliegt. Anschließend wird die Klemmschraube 23 so eingeschraubt, daß sie mit ihrem kegelstumpfförmigen Ende 24 in die Nut 22' im Schaft 16 des Spiralbohrers 4 eingreift und mit ihrer Stirnseite 24' an der Spannfläche 22 anliegt. Dadurch wird der Spiralbohrer 4 axial gesichert und außerdem drehfest mit dem Grundkörper 1 verbunden. Anschließend werden die Fasteile 5 von außen in die Aufnahmeöffnungen 45, 46 so weit geschoben, bis sie an der Rückenfläche 65 des Steges 20, 20' des Spiralbohrers 4 anliegen (Fig. 1 und 2). Dann werden die Klemmschenkel 41, 42 mit den Klemmschrauben 47, 48 gegen die Fasteile 5 gezogen, so daß die Fasteile einwandfrei festgeklemmt werden.

Soll mit dem Werkzeug eine Bohrung mit einer anderen Länge gebohrt werden, wird die Klemmschraube 23 geringfügig gelockert, wobei das Ende 24 noch in die wendelförmig verlaufende Nut 22' im Schaft 16 des Spiralbohrers 4 eingreift. Nunmehr kann der Spiralbohrer 4 durch Drehen axial verschoben werden, wobei die Klemmschraube 23 als Führung für den Spiralbohrer 4 dient. Da die Steigung der Nut 22' im Schaft 16 des Spiralbohrers 4 der Steigung der Spannuten 18, 19 entspricht, bleibt bei der Verstellung des Spiralbohrers 4 der Schneidenteil 59 stets oberhalb der Rückenfläche 65 des Steges 20, 20' des Spiralbohrers 4. Anschließend wird die Klemmschraube 23 angezogen und der Spiralbohrer in seiner neuen Lage gesichert. Die Stellschraube 9 wird entweder vor der Verstellung des Spiralbohrers 4 zurückgedreht, wenn der Überstand 10 kleiner werden soll, oder die Stellschraube 9 wird anschließend an die Verstellung des Spiralbohrers 4 so weit nachgestellt, bis sie am Spiralbohrer 4 anliegt.

Mit dem Spiralbohrer 4 wird zunächst im Werkstück 11 die entsprechende Bohrung angebracht. Bei weiterem Bohrfortschritt kommen die Fasteile 5 mit dem Bohrungsrand in Eingriff und stellen an ihm eine entsprechende Fase her. Aus diesem Grunde liegen die Fasteile 5 unter einem solchen Winkel zur Achse des Werkzeuges (Fig. 1 und 2), daß sie mit ihren Schneiden über den Grundkörper 1 ragen.

Falls die Fasteile 5 in ihrer Längsrichtung nachgestellt werden müssen, ist es lediglich notwendig, die Klemmschrauben 47, 48 zu lockern. Dann lassen sich die Fasteile 5 stufenlos in die gewünschte Lage verstellen. Der Grundkörper 1 ist konstruktiv sehr einfach ausgebildet. Da die federnden Klemmschenkel 41, 42 an den Aufnahmeteil 3 des Grundkörpers 1 angebunden sind, müssen sie nicht gesondert am Grundkörper montiert werden.

## Patentansprüche

1. Kombinationswerkzeug mit einem Grundkörper (1), in dem ein Bohrer (4) axial einstellbar untergebracht ist, der wenigstens eine wendelförmige Spannut (18, 19) aufweist, und mit wenigstens einem Fasteil (5), das winklig zur Achse des Grundkörpers (1) verstellbar in mindestens einer Aufnahme (45, 46) untergebracht und durch wenigstens einen federnden Klemmteil (41, 42) in der Aufnahme (45, 46) festklemmbar ist,
dadurch gekennzeichnet, daß die Aufnahme (45, 46) für das Fasteil (5) im Grundkörper (1) vorgesehen ist, mit dem der Klemmteil (41, 42) einstückig ausgebildet ist, der quer zur Achse des Grundkörpers (1) von einer Klemmschraube (47, 48) durchsetzt ist, mit der der Klemmteil (41, 42) gegen das in der Aufnahme (45, 46) sitzende Fasteil (5) verspannbar ist, daß der Schaft des Bohrers (4) eine wendelförmige Spannfläche (22) aufweist, die gleiche Steigung wie ein wendelförmiger, die Spannut (18, 19) begrenzender Steg (20, 20') hat und die in Richtung auf das Schaftende des Bohrers (4) ansteigt, und daß im Grundkörper (1) wenigstens eine Spannschraube (23) gelagert ist, die mit der Spannfläche (22) zusammenwirkt und den Bohrer (4) im Grundkörper (1) festspannt.

2. Kombinationswerkzeug nach Anspruch 1,
dadurch gekennzeichnet, daß der Klemmteil (41, 42) eine den Grundkörper (1) radial bis zu einer Aufnahme (6, 7) für den Bohrer (4) durchsetzende Ausnehmung (25, 26) in Umfangsrichtung begrenzt.

3. Kombinationswerkzeug nach Anspruch 1 oder 2,
dadurch gekennzeichnet, daß der Grundkörper (1) zwei diametral einander gegenüberliegende Klemmteile (41, 42) aufweist.

4. Kombinationswerkzeug nach Anspruch 3,
dadurch gekennzeichnet, daß die beiden Klemmteile (41, 42) jeweils eine Ausnehmung (25, 26) des Grundkörpers (1) an einer Seite begrenzen.

5. Kombinationswerkzeug nach einem der Ansprüche 1 bis 4,
dadurch gekennzeichnet, daß die Aufnahme (45, 46) für das Fasteil (5) unrunden Querschnitt hat.

6. Kombinationswerkzeug nach einem der Ansprüche 1 bis 5,
dadurch gekennzeichnet, daß das Fasteil (5) wenigstens eine von einer Kreisform abweichende Führungsfläche (52, 53) aufweist, die sich in Längsrichtung des Fasteiles erstreckt.

7. Kombinationswerkzeug nach Anspruch 6,
dadurch gekennzeichnet, daß die Aufnahme (45, 46) mindestens eine Gegenfläche (54, 55) für die Führungsfläche (52, 53) des Fasteiles (5) aufweist.

8. Kombinationswerkzeug nach Anspruch 6 oder 7,
dadurch gekennzeichnet, daß die Führungs- und die Gegenfläche (52, 53; 54, 55) eben sind.

9. Kombinationswerkzeug nach einem der Ansprüche 1 bis 8,
dadurch gekennzeichnet, daß die Klemmschraube (47, 48) in eine Gewindebohrung (50) des Grundkörpers (1) schraubbar ist.

10. Kombinationswerkzeug nach einem der Ansprüche 1 bis 9,
dadurch gekennzeichnet, daß die Spannschraube (23) ein kegelstumpfförmiges Ende (24) aufweist, mit dem sie mit der Spannfläche (22) des Bohrers (4) zusammenwirkt.

## Claims

1. A combination tool with a basic body (1), in which a drill (4) provided with at least one helical cutting groove (18, 19) is arranged so as to be axially adjustable, and with at least one bevelling part (5) which is arranged in at least one receiving means (45, 46) so as to be displaceable at an angle to the axis of the basic body (1) and which can be firmly clamped in the receiving means (45, 46) by at least one resilient clamping part (41, 42), **characterized in that** the receiving means (45, 46) for the bevelling part (5) is provided in the basic body (1), with which the clamping part (41, 42) is formed in one piece, which [clamping part] is traversed transversely to the axis of the basic body (1) by a clamping screw (47, 48) by which the clamping part (41, 42) can be clamped against the bevelling part (5) arranged in the receiving means (45, 46), the shank of the drill (4) has a helical tightening face (22) which has the same pitch as a helical land (20, 20') bounding the cutting groove (18, 19) and which ascends in the direction of the end of the shank of the drill (4), and at least one tightening screw (23), which cooperates with the tightening face (22) and firmly tightens the drill (4) in the basic body (1), is mounted in the basic body (1).

2. A combination tool according to Claim 1 **characterized in that** in the peripheral direction the clamping part (41, 42) bounds a recess (25, 26) radially traversing the basic body (1) as far as a receiving means (6, 7) for the drill (4).

3. A combination tool according to Claim 1 or 2, **characterized in that** the basic body (1) is provided with two clamping parts (41, 42) diametrically opposite each other.

4. A combination tool according to Claim 3, **characterized in that** the two clamping parts (41, 42) each bound a respective recess (25, 26) in the basic body (1) on one side.

5. A combination tool according to one of Claims 1 to 4, **characterized in that** the receiving means (45, 46) for the bevelling part (5) has a non-round cross-section.

6. A combination tool according to one of Claims 1 to 5, **characterized in that** the bevelling part (5) is provided with at least one guide face (52, 53) which deviates from the shape of a circle and which extends in the longitudinal direction of the bevelling part.

7. A combination tool according to Claim 6, **characterized in that** the receiving means (45, 46) has at least one counter face (54, 55) for the guide face (52, 53) of the bevelling part (5).

8. A combination tool according to Claim 6 or 7, **characterized in that** the guide faces and the counter faces (52, 53; 54, 55) are flat.

9. A combination tool according to one of Claims 1 to 8, **characterized in that** the clamping screw (47, 48) can be screwed into a threaded bore (50) in the basic body (1).

10. A combination tool according to one of Claims 1 to 9, **characterized in that** the tightening screw (23) has a frustoconical end (24) by which it cooperates with the tightening face (22) of the drill (4).

## Revendications

1. Outil combiné, comprenant un corps de base (1), dans lequel est logé un foret (4) avec faculté de réglage axial, celui-ci présentant au moins une gorge à copeaux (18, 19) de forme hélicoïdale, et comprenant au moins une partie de lamage (5), logée dans au moins un logement (45, 46) avec faculté de réglage suivant un angle par rapport à l'axe du corps de base (1), et susceptible d'être fermement coincée dans le logement (45, 46) par au moins une pièce de coincement élastique (41, 42),
caractérisé en ce que le logement (45, 46) pour la partie de lamage (5) est prévu dans le corps de base (1), avec lequel la pièce de coincement (41, 42) est réalisée d'une seule pièce, cette dernière étant traversée perpendiculairement à l'axe du corps de base (1) par une vis de coincement (47, 48) avec laquelle la pièce de coincement (41, 42) est susceptible d'être serrée contre la partie de lamage (5) reçue dans le logement (45, 46), en ce que le fût du foret (4) comporte une surface de serrage (22) de forme hélicoïdale, qui présente la même pente qu'une barrette (20, 20') hélicoïdale limitant la gorge à copeaux (18, 19) et monte en direction de l'extrémité du fût du foret (4), et en ce que dans le corps de base (1) est logée au moins une vis de serrage (23) qui coopère avec la surface de serrage (22) et assure le blocage du foret (4) dans le corps de base (1).

2. Outil combiné selon la revendication 1, caractérisé en ce que la pièce de coincement (41, 42) limite en direction périphérique un évidement (25, 26) qui traverse radialement le corps de base (1) jusqu'à un logement (6, 7) pour le foret (4).

3. Outil combiné selon l'une ou l'autre des revendications 1 et 2, caractérisé en ce que le corps de base (1) comporte au moins deux pièces de coincement (41, 42) diamétralement opposées l'une à l'autre.

4. Outil combiné selon la revendication 3, caractérisé en ce que les deux pièces de coincement (41, 42) délimitent respectivement un évidement (25, 26) du corps de base (1) sur un côté.

5. Outil combiné selon l'une des revendications 1 à 4, caractérisé en ce que le logement (45, 46) pour la pièce de lamage (5) présente une section non arrondie.

6. Outil combiné selon l'une des revendications 1 à 5, caractérisé en ce que la pièce de lamage (5) présente au moins une surface de guidage (52, 53) qui diffère d'une forme circulaire et qui s'étend dans la direction longitudinale de la pièce de lamage.

7. Outil combiné selon la revendication 6, caractérisé en ce que le logement (45, 46) comporte au moins une contre-surface (54, 55) pour la surface de guidage (52, 53) de la pièce de lamage (5).

8. Outil combiné selon l'une ou l'autre des revendications 6 et 7, caractérisé en ce que la surface de guidage et la contre-surface (52, 53 ; 54, 55) sont planes.

9. Outil combiné selon l'une des revendications 1 à 8, caractérisé en ce que la vis de coincement (47, 48) est susceptible d'être vissée dans un perçage taraudé (50) du corps de base (1).

10. Outil combiné selon l'une des revendications 1 à 9, caractérisé en ce que la vis de serrage (23) présente une extrémité (24) en forme de tronc de cône, au moyen de laquelle elle coopère avec la surface de serrage (22) du foret (4).
